# EUROPÄISCHE PATENTSCHRIFT

(11) **EP 0 538 284 B1**
(45) Veröffentlichungstag und Bekanntmachung des Hinweises auf die Patenterteilung: **11.09.1996**
(21) Anmeldenummer: 91911721.8
(22) Anmeldetag: 02.07.1991
(51) Int. Cl.: H04N 1/40

(54) **VERFAHREN ZUM DRUCKEN EINES HALBTONBILDES**
PROCESS FOR PRINTING A HALF-TONE IMAGE
PROCEDE D'IMPRESSION D'IMAGES EN DEMI-TEINTES

(30) Priorität: 10.07.1990 DE 4022081
(43) Veröffentlichungstag der Anmeldung: 28.04.1993
(73) Patentinhaber: EASTMAN KODAK COMPANY, Rochester, New York 14650 (US)
(72) Erfinder: DREES, Friedrich-Wilhelm, D-1000 Berlin 45 (DE); NISIUS, Raimund, D-1000 Berlin 12 (DE); PEKRUHN, Wolfgang, D-1000 Berlin 33 (DE)
(74) Vertreter: Pohle, Reinhard, Dipl.-Phys.
(86) Internationale Anmeldenummer: DE9100556
(87) Internationale Veröffentlichungsnummer: WO9201353

(56) Entgegenhaltungen:
- EP-A- 0 225 697
- WO-A-91/04864
- DE-A- 2 616 947
- DE-A- 3 821 616
- GB-A- 2 070 888
- US-A- 4 368 491
- PATENT ABSTRACTS OF JAPAN vol. 6, no. 119 (E-116)(997) 3. Juli 1982 & JP-A-57 48 868 (MITSUBISHI DENKI K.K. ) 20. März 1982 siehe Zusammenfassung

## Beschreibung

Die Erfindung betrifft ein Verfahren zum Drucken eines Halbtonbildes mittels einzeln ansteuerbarer Druckelemente, bei dem das Halbtonbild aus Bildelementen zusammengesetzt wird und bei dem zur Erzeugung von Halbtonstufen gemäß vorgegebener Druckdaten jedes Bildelement von mehreren, im Raster angeordneten, wahlweise mit Farbpunkten belegbaren Druckpositionen gebildet wird und die Größe und/oder optische Dichte jedes Farbpunktes jeweils gemäß einem der jeweiligen Druckposition zugeordneten, aus den Druckdaten gewonnenen Farbstufenwert stufenweise eingestellt wird.

Im Rahmen der vorliegenden Erfindung ist unter Drucken grundsätzlich das Aufbringen von Farbpunkten auf einen Aufzeichnungsträger und unter einem Druckelement dementsprechend ein Element zu verstehen, mit dem dieses Aufbringen erfolgt. Ein Halbtonbild weist unterschiedliche Halbtonstufen (z. B. Grauwerte) derselben Farbe auf. Aus der DE-OS 36 04 577 ist ein Verfahren der eingangs genannten Art bekannt, bei dem ein Halbtonbild aus einzelnen Bildelementen zusammengesetzt wird. Bei dem bekannten Verfahren wird zur Erzeugung von Halbtonstufen gemäß vorgegebener Druckdaten jedes Bildelement von mehreren, im Raster angeordneten, wahlweise mit Farbpunkten belegbaren Druckpositionen gebildet. Die Größe bzw. optische Dichte jedes Farbpunktes ist durch einen der jeweiligen Druckposition zugeordneten Farbstufenwert stufenweise einstellbar. Der Farbstufenwert wird aus das darzustellende Halbtonbild repräsentierenden Druckdaten gewonnen. Das bekannte Verfahren erlaubt bei Verwendung von zwei unterschiedlichen Farbpunktgrößen und Bildelementen, die aus vier im 2 x 2-Raster angeordneten Druckpositionen gebildet sind, insgesamt 16 Halbtonstufen darzustellen. Mit dem bekannten Verfahren ist zwar bei geeigneter Druckpositionbelegung mit Farbpunkten geeigneter Größe eine verhältnismäßig gleichmäßige Abstufung der Halbtonstufen erzielbar, jedoch sind die Stufen zwischen den einzelnen Halbtonstufen verhältnismäßig groß und für das menschliche Auge deutlich sichtbar.

In der DE-OS 36 04 577 wird auch eine Erhöhung der Anzahl der einzelnen Halbtonstufen beschrieben, indem die Bildelemente aus im 3 x 3-Raster angeordneten Druckpositionen gebildet sind.. Dies wirkt sich jedoch im Hinblick auf die zur Durchführung des bekannten Verfahrens gewählte 8-Bit-Architektur der Speicherbausteine und auf die Verarbeitungsgeschwindigkeit des 8-Bit-Mikroprozessors ungünstig aus.

Das Dokument EP-A-0 225 697 offenbart einen Drucker mit einem Druckkopf, dessen Druckelemente in einer Reihe angeordnet sind. Die Druckelemente sind in einzelne Blöcke unterteilt. Eine Schaltung ist vorgesehen, die die erforderlichen Bildpunkte in einem Bildelement auswählt. Ebenfalls wird mit der Schaltung auch die Wiederholrate ausgewählt, die erforderlich ist, um Bildpunkte mit unterschiedlicher Gradation zu drucken. Die Druckdaten sind in einem Speicher abgelegt. Die Anzahl der zu druckenden Grauwerte ist auf 16 beschränkt.

Die DE-OS-26 16 947 beschreibt ein Verfahren zu Drucken von reproduzierten Halbtonvorlagen. In einem Zwischenspeicher werden die Tonabstufungen jedes Bildpunktes einer Zeile in einem Binärcode mit 3 Bits gespeichert. Die Bildinformation wird einem Auswahlgatterkreis zugeführt, der bei Übereinstimmung eines bestimmten Grautons über mindestens ein Zeitintervall hinweg einem Reproduktionselement Energie zugeführt. Die Übertragungszeit T für eine Zeile wird durch einen Taktkreis in mehrere Zeitintervalle aufgeteilt. Ein Nachteil dieses Verfahrens ist es, daß die Geschwindigkeit durch die Vergleichsoperation im Auswahlgatterkreis beschränkt ist. Mittels diesem Verfahren können lediglich 8 unterschiedliche Grauwerte reproduziert werden.

Der Erfindung liegt die Aufgabe zugrunde, ein Verfahren zum Drucken eines Halbtonbildes zu schaffen, bei dem eine hohe Anzahl von Halbtonstufen in feiner Abstufung ermöglicht ist und dennoch eine hohe Aufzeichnungsgeschwindigkeit bei geringem schaltungstechnischem Aufwand ermöglicht ist.

Diese Aufgabe wird erfindungsgemäß bei einem Verfahren der eingangs genannten Art dadurch gelöst, daß zur Speicherung der gewonnenen Farbstufenwerte einer Druckseite ein seitenweise strukturierter Speicher mit mindestens zwei Speicherseiten verwendet wird, daß jeder Druckposition auf jeder Speicherseite des Speichers eine binäre Speicherzelle zugeordnet wird und daß zur Ansteuerung der Druckelemente der Inhalt der jeweils derselben Druckposition zugeordneten Speicherzellen logisch verknüpft wird. Unter einem seitenweise strukturierten Speicher ist ein Speicher zu verstehen, der auf das Format des auszugebenden Halbtonbildes derart abgestimmt ist, daß jede Speicherseite eine der Anzahl möglicher Druckpositionen pro Halbtonbild entsprechende Anzahl von Speicherzellen aufweist. Die Abstufung der Farbpunkte kann durch unterschiedliche Farbpunktgrößen und/oder unterschiedliche optische Dichten der Farbpunkte realisiert werden. Die Verwendung eines derartigen Seitenspeichers bietet den Vorteil, daß tatsächlich nur die im weiteren Druckprozeß auch erforderlichen Daten gespeichert und weiterverarbeitet werden. Durch Zuschalten bzw. Abschalten von ganzen Speicherseiten des Speichers kann in einfacher Weise eine Anpassung an die Anzahl der zu einem Bildelement zusammengefaßten Druckpositionen erfolgen und in einfacher Weise eine Erhöhung bzw. Erniedrigung der Halbtonstufenzahl eingestellt werden. Die logische Verknüpfung der jeweils derselben Druckposition zugeordneten Speicherzellen der einzelnen Speicherseiten ist einfach realisierbar und erfordert nur einen geringen gerätetechnischen bzw. steuerungstechnischen Aufwand.

Eine vorteilhafte Fortbildung des erfindungsgemäßen Verfahrens besteht darin, daß auf einer Speicherseite des Seitenspeichers in alle Speicherzellen, die einer mit einem Farbpunkt belegten Druckposition zugeordnet sind, unabhängig von der Größe und/oder optischen Dichte des Farbpunktes derselbe Inhalt eingeschrieben wird und daß bedarfsweise unter Umgehung der logischen Verknüpfung die Ansteuerung der Druckelemente ausschließlich gemäß dem Inhalt der einen Speicherseite durchgeführt wird. Auf diese Weise ist eine besonders einfache Möglichkeit gegeben, auf Ausgabe mit einheitlichen Farbpunkten umzuschalten, wie es beispielsweise bei Textausdruck (ASCII-Zeichen) ausreichend ist. In diesem Fall werden lediglich die Speicherzellen der einen Seite direkt ausgelesen, die Druckelemente gemäß deren Inhalt angesteuert und die den entsprechenden Druckpositionen zugeordneten Farbpunkte erzeugt, wodurch in diesem Fall eine erhebliche Steigerung der Druckgeschwindigkeit erzielt wird.

Hinsichtlich der Datenverarbeitung und des schaltungstechnischen Aufwandes im Verhältnis zu der Anzahl erzielbarer Halbtonstufen hat sich ein Speicher mit drei Speicherseiten als besonders vorteilhaft erwiesen. Damit sind maximal sieben verschiedene Größen bzw. optische Dichten und "weiß" (kein Farbpunkt) pro Druckposition erzielbar. Entsprechend der pro Bildelement vorgesehenen Druckpositionen läßt sich damit bereits eine ausreichend große Anzahl unterschiedlich abgestufter Bildelemente (Halbtonstufen) erzeugen. Sieben verschiedene Größen bzw. optische Dichten lassen sich mit den meisten Aufzeichnungseinrichtungen mit hoher Wiederholgenauigkeit auch bei sich ändernden Betriebsverhältnissen, beispielsweise Temperaturänderungen, mit geringem Aufwand verhältnismäßig sicher erreichen.

Eine weitere vorteilhafte Fortbildung des erfindungsgemäßen Verfahrens besteht darin, daß die Verknüpfung der jeweils derselben Druckposition zugeordneten Speicherzellen speicherzellenweise in einer Verknüpfungsschaltung erfolgt. Damit ist eine besonders schnelle und zuverlässige Verarbeitungsmöglichkeit der in den Speicherzellen abgelegten Daten bei geringem Schaltungsaufwand ermöglicht.

Die Erfindung wird im folgenden anhand einer Zeichnung erläutert. Es zeigen
Figur 1 eine schematische Darstellung des erfindungsgemäßen Verfahrens,
Figur 2 eine Umsetzvorschrift,
Figur 3 den Zusammenhang zwischen Farbstufenwert, Pulslänge und Größe von Farbpunkten,
Figur 4 eine detaillierte Darstellung einer Verknüpfungseinrichtung und
Figur 5 ein mit dem erfindungsgemäßen Verfahren erzeugtes Aufzeichnungsmuster.

Die Erfindung wird im folgenden anhand eines Vorlagenbildes bzw. erzeugten Halbtonbildes erläutert, das 64 verschiedene Halbtonstufen (Grauwerte) aufweist; das Verfahren ist prinzipiell nicht nur im Schwarzdruck, sondern bei jeder Farbe anwendbar. Das erfindungsgemäße Verfahren ist auch zur Erzeugung von Mehrfarben-Halbtonbildern bestens geeignet, indem das Verfahren für jede der Grundfarben (Gelb, Magenta, Cyan) erneut angewendet wird.

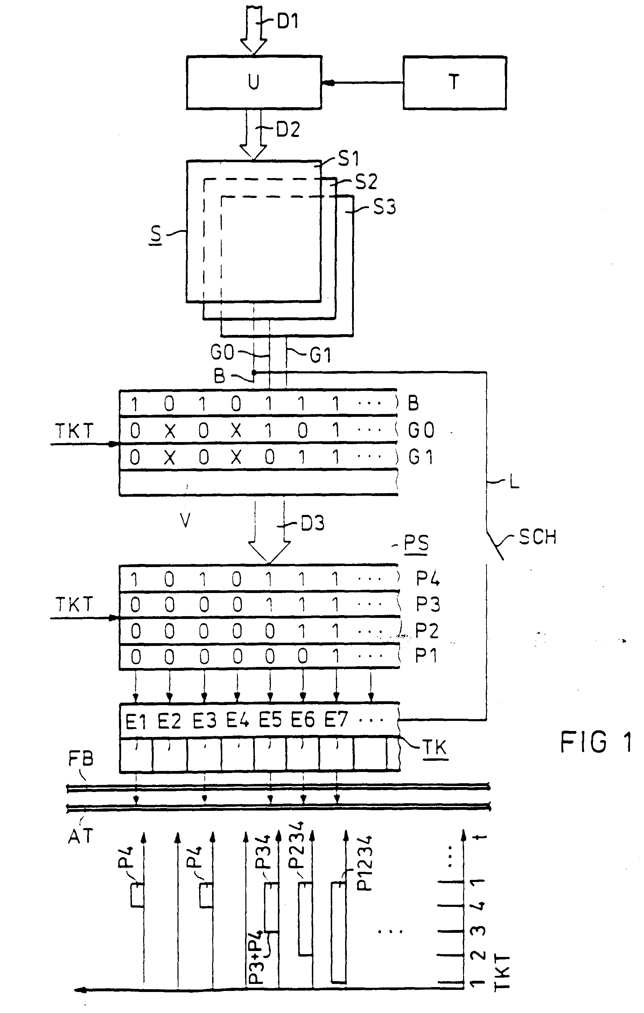

Figur 1 zeigt Druckdaten D1, die ein Vorlagenbild mit 64 verschiedenen Halbtonstufen repräsentieren und beispielsweise von einer Datenverarbeitungsanlage geliefert werden. Ein Umsetzer U ordnet jeder auftretenden Halbtonstufe gemäß einer Tabelle T ein Bildelement zu, das vier im Raster angeordnete Druckpositionen enthält. Auf jeder Druckposition kann ein Farbpunkt in einer Farbe in vier verschiedenen Größen (Stufungen) ausgegeben werden.

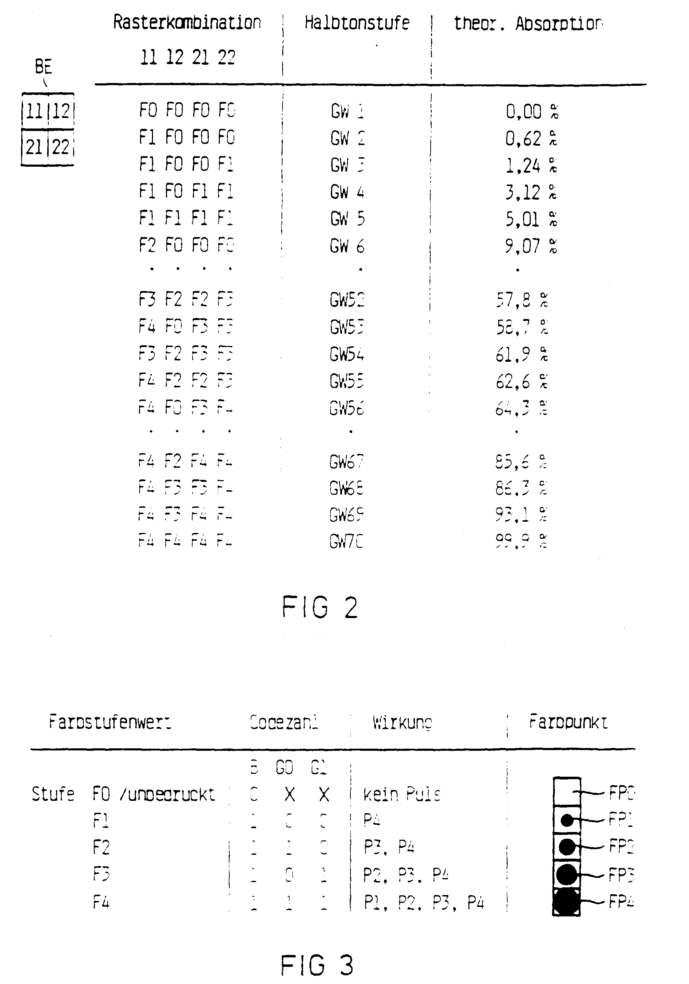

Die Wirkungsweise des Umsetzers U wird im Zusammenhang mit einer Umsetzvorschrift nach Figur 2 näher erläutert. Es wird vorausgesetzt, daß die Auflösung der Aufzeichnungseinrichtung doppelt so hoch wie die Auflösung des Vorlagenbildes gemäß der Druckdaten D1 ist. Wie Figur 2 auszugsweise zeigt, können mit vier Druckpositionen 11, 12, 21, 22 in einem Bildelement BE und vier verschiedenen Farbstufenwerten F1, F2, F3, F4 der Farbpunkte und der Stufe F0 als unbedruckte ("weiße") Druckposition insgesamt 70 verschiedene Halbtonstufen (Rasterkombinationen) GW1 bis GW70 dargestellt werden. Ausgehend von der Stufe GW1 (kein Druck) bis zur Halbtonstufe GW 70, bei der an jeder Druckposition 11, 12, 21, 22 des Bildelementes BE ein Farbpunkt mit (maximalem) Farbstufenwert F4 gedruckt wird, läßt sich eine gleichmäßige Stufung von 0 % bis annähernd 100 % theoretischer Absorption erzielen. Da nur 64 verschiedene Halbtonstufen erforderlich sind, können noch sechs Halbtonstufen ausgesondert werden, deren relativer Unterschied verhältnismäßig gering ist. Wie Figur 2 weiter zeigt, wird eine Halbtonstufe GW 6 beispielsweise dadurch dargestellt, daß das Bildelement BE an seiner Druckposition 11 mit einem Farbpunkt des Farbstufenwertes F2 versehen ist und an den übrigen Druckpositionen 12, 21 und 22 kein Farbpunkt (Stufe F0) erzeugt wird. Auf diese Weise wird mit sämtlichen Druckdaten D1 verfahren, bis jeder Druckposition ein Farbpunkt mit einem bestimmten Farbstufenwert zugeordnet ist.

Die Farbstufenwerte F1 bis F4 und die Stufe FO werden in der in Figur 3 dargestellten Weise in einer Codezahl mit einer ersten Stelle B, einer zweiten Stelle GO und einer dritten Stelle G1 dargestellt. Beispielsweise entspricht die Codezahl "111" (B/G0/G1) dem Farbstufenwert F4. Die Codezahl "000" entspricht der Stufe FO (kein Farbauftrag). Ferner zeigt Figur 3 schematisch die Größe der den jeweiligen Farbstufenwerten F1 bis F4 entsprechenden Farbpunkte FP1 bis FP4.

Die codierten Farbstufenwerte werden als Datenstrom D2 in einen seitenweise strukturierten Speicher S (Fig. 1) eingeschrieben, wobei die Werte für die Stelle B der ersten Seite S1, die Werte für die Stellen GO der zweiten Seite S2 und die Werte für die Stellen G1 der dritten Seite S3 in der Weise zugeordnet werden, daß denselben Druckpositionen zugeordnete Werte in dieselben Speicherzellen der Speicherseiten S1 bis S3 eingetragen werden.

Wie Figur 1 weiter zeigt, werden zur Aufzeichnung eines Halbtonbildes die Speicherseiten S1, S2 und S3 speicherzellenweise (zeilenweise) Bit für Bit ausgelesen und einer Verknüpfung V unterzogen. Das Ergebnis der Verknüpfung V wird als Datenstrom D3 einem Pulslängenspeicher PS zugeführt. Die oberste Zeile des Pulslängenspeichers PS enthält die Ansteuerungsvorgaben für Pulse P4, mit denen Druckelemente E1 bis E7 eines als zeilenförmiger Thermodruckkopf ausgebildeten Druckkopfes TK beaufschlagt werden. Darunter sind Ansteuerungsvorgaben für weitere Pulse P3, P2 und P1 gezeigt, die ggf. zusätzlich die Druckelemente E1 bis E7 beaufschlagen. Zwischen dem Druckkopf TK und einem Aufzeichnungsträger AT befindet sich ein Thermotransfer-Farbband FB.

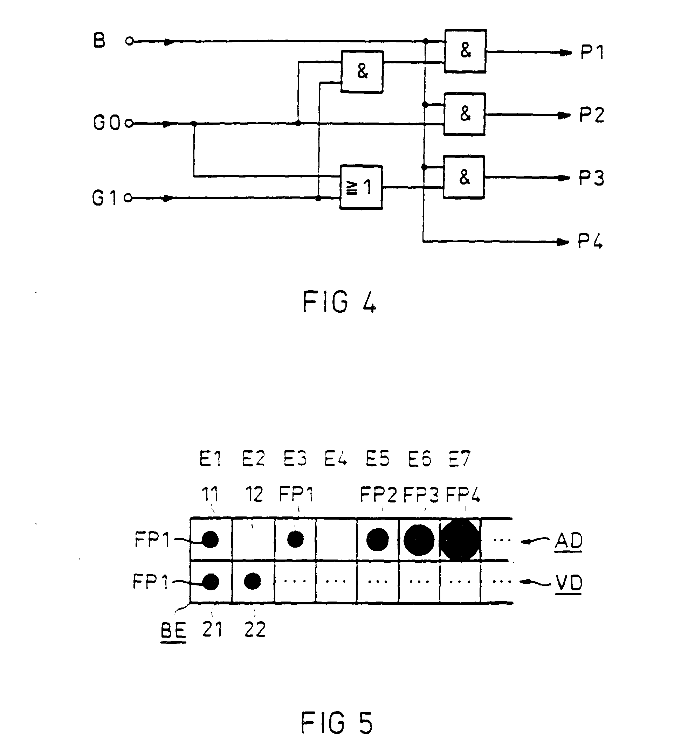

Wie Figur 4 zeigt, erfolgt die Verknüpfung V durch logische UND- bzw. ODER-Glieder; ein Farbpunkt wird nur bei derjenigen Druckposition erzeugt, deren ihr zugeordnete Speicherzelle der Speicherseite S1 für die Stelle B den Wert "1" liefert. Mit sämtlichen Pulsen P1, P2, P3 und P4 wird das derjenigen Druckposition zugeordnete Druckelement beaufschlagt (z. B. E7 in Fig. 1), bei dem die dieser Druckposition zugeordneten Speicherzellen der einzelnen Speicherseiten S1 bis S3 für die Stellen B, G0 und G1 den Wert "1" liefern. Auf diese Art werden für sämtliche Druckpositionen Ansteuerungsvorgaben erzeugt, wie die im Pulsspeicher PS beispielhaft dargestellten Werte. Dabei bedeutet der Wert "1", daß ein entsprechender Ansteuerpuls dem jeweiligen Druckelement E1 bis E7 zugeführt wird, hingegen der Wert "0", daß kein Ansteuerpuls zugeführt wird. Man erkennt, daß jeweils diejenigen Druckpositionen (vgl. E2 und E4 in Figur 1) keinen Ansteuerpuls erhalten, deren zugeordnete Speicherzellen der Speicherseite S1 mit dem Wert "0" belegt sind, d. h. die in dem Code enthaltende Stelle B den Wert "0" aufweist; demzufolge bleiben diese Druckpositionen auf dem Aufzeichnungsträger AT ohne Farbauftrag. Die einzelnen Pulse addieren sich für das jeweilige Aufzeichnungselement zu Gesamtpulsen. Zum Beispiel haben sich beim Druckelement E5 die Pulse P3 und P4 zu einem Gesamtpuls P34 addiert, der einen Farbpunkt FP2 (vgl. Figur 3) auf dem Aufzeichnungsträger AT bewirkt. Die jeweiligen Pulse P1 bis P4 sind mit einem in der Figur 1 dargestellten Takt TKT synchron. Die einzelnen Verfahrensschritte gemäß Figur 1 werden durch den Takt TKT synchronisiert und durch einen nicht näher dargestellten Mikroprozessor gesteuert.

In Figur 5 sind von den Druckelementen E1 bis E7 gemäß Figur 1 erzeugte Farbpunkte für eine aktuell betrachtete Druckzeile AD dargestellt; die Druckelemente E2 und E4 haben keinen Farbauftrag bewirkt, da die den entsprechenden Druckpositionen zugeordneten Speicherzellen der Speicherseite S1 für die Stelle B des Codes jeweils den Wert "0" aufwiesen. Ferner zeigt die Figur 5 ein Bildelement BE, das aus dem von dem Druckelement El in der aktuell betrachteten Druckzeile AD aufgebrachten Farbpunkt FP1 im Feld 11 und FPO (kein Farbauftrag) im Feld 12 und den Farbpunkten FP1 in den Feldern 21 und 22 der vorhergehenden Druckzeile VD besteht. Damit ist gemäß Figur 2 eine Halbtonstufe GW 4 aufgezeichnet, die annähernd 3 % Einfärbung des Aufzeichnungsträgers AT in diesem Bereich darstellt. Ferner sind in Figur 5 die von den Aufzeichnungselementen E5, E6 und E7 erzeugten Farbpunkte, nämlich FP2, FP3, und FP4, dargestellt.

Dadurch, daß die Belegung der Speicherseite S1 darüber entscheidet, ob ein Farbpunkt erzeugt wird oder die der jeweiligen Speicherzelle zugeordnete Druckposition ohne Farbauftrag bleibt, kann in einfacher Weise eine erhebliche Erhöhung der Aufzeichnungsgeschwindigkeit bei Ausgabe von reinen Textzeichen (ASCII) erfolgen, indem lediglich der Inhalt der Speicherseite S1 ausgewertet und zur Ansteuerung der Aufzeichnungselemente E1 bis E7 des Druckkopfes TK verwendet wird. Dies ist in der Figur 1 durch eine Leitung L mit zugehörigem Schalter SCH angedeutet, mit der der in diesem Fall überflüssige Vorgang der Verknüpfung V der codierten Farbpunkte umgangen wird und die in der Speicherseite S1 enthaltenen Daten direkt zum Druckkopf TK geleitet werden.

Mit dem erfindungsgemäßen Verfahren wird eine erhebliche Vereinfachung des steuerungs- und speicherungstechnischen Aufwandes bei einer sehr differenzierten Darstellung eines Halbtonbildes erzielt. Dies wird anhand des folgenden Beispiels verdeutlicht, wobei wieder angenommen wird, daß ein Vorlagenbild durch Druckdaten D1 repräsentiert wird, die 64 verschiedene Halbtonstufen aufweisen und daß das Vorlagenbild die Größe eines DIN-A4 Blattes aufweist. Es sei eine Auflösung des Vorlagenbildes in den Druckdaten D1 von 150 Positionen pro Inch (150 dpi) vorausgesetzt. Bei einer 8-Bit-Architektur (wie beispielsweise in der eingangs erwähnten DE-OS 36 04 577 beschrieben) erfordert eine Speicherung der Punkte dieses Vorlagenbildes 2,3 Mbyte Speicherplatz, da ein DIN A4 Blatt bei 150 dpi 1280 x 1790 Punkte enthält. Von den 2,3 MByte Speicherplatz werden 4,4 MBit des Speichers mit dem Wert 0 belegt. Dies resultiert daraus, daß mit 8 Bit 256 Graustufen darstellbar wären. Die hohe Anzahl von nicht genutztem Speicherplatz erhöht die Kosten für die Schaltung und vermindert die Verarbeitungsgeschwindigkeit erheblich. Erfolgt lediglich eine Umsetzung im Umsetzer U in jeweils von jeweils 2 x 2 Druckpositionen gebildete Bildelemente und ist die Auflösung der Aufzeichnungseinrichtung mit 300 dpi doppelt so hoch wie die Auflösung des Vorlagenbildes (150 dpi), wäre ein Speicherbedarf von 4,5 MByte erforderlich, wovon 8,8 MBit wegen der 8-Bit-Architektur den Wert 0 enthielten. Das erfindungsgemäße Verfahren benötigt jedoch lediglich 3,4 MByte Speicherplatz (3 Seiten à 1280 Bit x 2 x 1770 Bit x 2 = 1,133 Byte), weil bei dem erfindungsgemäßen Verfahren keine Speicherbereiche von vornherein - unabhängig von den zur Verfügung stehenden Druckdaten - mit dem Wert "0" belegt sind.

## Patentansprüche

1. Verfahren zum Drucken eines Halbtonbildes mittels einzeln ansteuerbarer Druckelemente (E1...E7),
- bei dem das Halbtonbild aus Bildelementen (BE) zusammengesetzt wird und
- bei dem zur Erzeugung von Halbtonstufen (GW1...GW70) gemäß vorgegebener Druckdaten (D1) jedes Bildelement (BE) von mehreren, im Raster angeordneten, wahlweise mit Farbpunkten (FP1...FP4) belegbaren Druckpositionen (11,12,21,22) gebildet wird und die Größe und/oder optische Dichte jedes Farbpunktes (FP1...FP4) jeweils gemäß einem der jeweiligen Druckposition (11,12,21,22) zugeordneten, aus den Druckdaten (D1) gewonnenen Farbstufenwert (F0...F4) stufenweise eingestellt wird,
**dadurch gekennzeichnet**,
daß zur Speicherung der gewonnenen Farbstufenwerte (F0...F4) einer Druckseite ein seitenweise strukturierter Speicher (S) mit mindestens zwei Speicherseiten (S1, S2,S3) verwendet wird, daß jeder Druckposition (11,12,21,22) auf jeder Speicherseite (S1,S2,S3) des Speichers (S) eine binäre Speicherzelle zugeordnet wird und daß zur Ansteuerung der Druckelemente (E1...E7) der Inhalt der jeweils derselben Druckposition (11,12,21,22) zugeordneten Speicherzellen logisch verknüpft wird.

2. Verfahren nach Anspruch 1,
**dadurch gekennzeichnet**,
daß auf einer Speicherseite (S1) des Seitenspeichers (S) in alle Speicherzellen, die einer mit einem Farbpunkt (FP1...FP4) belegten Druckposition (11,12,21,22) zugeordnet sind, unabhängig von der Größe und/oder optischen Dichte des Farbpunktes (FP1...FP4) derselbe Inhalt eingeschrieben wird und daß bedarfsweise unter Umgehung der logischen Verknüpfung (V) die Ansteuerung der Druckelemente (E1...E7) ausschließlich gemäß dem Inhalt der einen Speicherseite (S1) durchgeführt wird.

3. Verfahren nach Anspruch 1 oder 2,
**dadurch gekennzeichnet**,
daß der Seitenspeicher (S) drei Speicherseiten (S1,S2,S3) umfaßt.

4. Verfahren nach einem der vorangehenden Ansprüche,
**dadurch gekennzeichnet,**
daß die Verknüpfung der jeweils derselben Druckposition (11,12,21,22) zugeordneten Speicherzellen speicherzellenweise in einer logischen Verknüpfungsschaltung erfolgt.

## Claims

1. Method for printing of a continuous-tone image by means of individually controllable print elements (E1...E7),
- in which said continuous-tone image is comprised of image elements (BE) and
- in which for generation of continuous-tone steps (GW1...GW70) in accordance with predetermined print data (D1) each image element (BE) is formed by several print positions (11, 12, 21, 22) arranged in the screen and optionally fillable with color dots (FP1...FP4), and in which the size and/or optical density of each color dot (FP1...FP4) is gradually adjusted in each case according to a color step value (F0...F4) assigned to the respective print position (11, 12, 21, 22) and obtained from said print data
characterized in that for storage of the obtained color step values (F0...F4) of a printed page a memory (S) structured in pages and having at least two memory pages (S1, S2, S3) is used, in that each print position (11, 12, 21, 22) on each memory page (S1, S2, S3) of said memory (S) is assigned a binary memory cell, and in that for operation of said print elements (E1...E7) the contents of said memory cells assigned to the same print position (11, 12, 21, 22) are linked in a logical operation.

2. Method according to claim 1, characterized in that on one memory page (S1) of said page memory (S) in all memory cells assigned to a print position (11, 12, 21, 22) filled with a color dot (FP1...FP4) the same contents are entered regardless of the size and/or optical density of said color dot (FP1...FP4), and in that the operation of said print elements (E1...E7) is performed if required by bypassing the logical operation (V) and exclusively in accordance with the contents of the one memory page (S1).

3. Method according to claim 1 or claim 2, characterized in that said page memory (S) comprises three memory pages (S1, S2, S3).

4. Method according to one of the preceding claims, characterized in that said memory cells assigned to the same print position (11, 12, 21, 22) are linked cell by cell in a logical operation.

## Revendications

1. Procédé d'impression d'image en demi-teintes au moyen d'une pluralité d'éléments d'impression commandés (E1....E7),
dans lequel l'image en demi-teintes est composée d'éléments d'image (BE) et
dans lequel en vue de la génération de degrés en demi-teintes (GW1...GW70) conformément à des données d'impression prédéterminées (D1), chaque élément d'image (BE) est formé de plusieurs positions d'impression (11, 12, 21, 22) disposées en réseau, pouvant être occupées sélectivement par des points de couleur (FP1...FP4) et la grandeur et/ou la densité optique de chaque point de couleur (FP1...FP4) est réglée par degré respectivement selon une valeur de teinte (F0...F4) associée à la position d'impression respective (11, 12, 21, 22) obtenue à partir des données d'impression (D1),
caractérisé en ce qu'en vue de la mémorisation des valeurs de teinte obtenues (F0...F4) d'une page d'impression est utilisée une mémoire à structure de page (S) avec au moins deux pages de mémoire (S1, S2, S3), en ce qu'à chaque position d'impression (11, 12, 21, 22) sur chaque page (S1, S2, S3) de la mémoire (S) est associée une cellule de mémoire binaire et en ce qu'en vue de la commande des éléments d'impression (E1...E7), le contenu des cellules de mémoire associées à la même position d'impression (11, 12, 21, 22) est combiné logiquement.

2. Procédé selon la revendication 1, caractérisé en ce que sur une page (S1) de la mémoire de page (S), dans toutes les cellules de mémoire qui sont associées à une position d'impression (11, 12, 21, 22) occupées par un point de couleur (FP1...FP4), indépendamment de la grandeur et/ou de la densité optique du point de couleur (FP1...FP4) est enregistré le même contenu et en ce qu'en cas de besoin, par conversion de la combinaison logique (V), la commande des éléments d'impression (E1...E7) est effectuée exclusivement selon le contenu d'une page de mémoire (S1).

3. Procédé selon la revendication 1 ou 2, caractérisé en ce que la mémoire de pages (S) comporte trois pages de mémoire (S1, S2, S3).

4. Procédé selon l'une quelconque des revendications précédentes, caractérisé en ce que la combinaison des cellules de mémoire associées respectivement à la même position d'impression (11, 12, 21, 22) s'effectue par lignes de mémoire dans un circuit de combinaison logique.
